(19) Europäisches Patentamt
European Patent Office
Office européen des brevets

(11) EP 4 438 682 A1

(12) EUROPEAN PATENT APPLICATION
published in accordance with Art. 153(4) EPC

(43) Date of publication:
02.10.2024 Bulletin 2024/40

(21) Application number: 23740081.7

(22) Date of filing: 13.01.2023

(51) International Patent Classification (IPC):
C09D 1/00 (2006.01)   C23C 22/07 (2006.01)
C23C 22/20 (2006.01)

(52) Cooperative Patent Classification (CPC):
C09D 1/00; C09D 7/61; C21D 8/12; C23C 22/07;
C23C 22/20; H01B 3/30

(86) International application number:
PCT/CN2023/072059

(87) International publication number:
WO 2023/134740 (20.07.2023 Gazette 2023/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.01.2022 CN 202210041436

(71) Applicant: BAOSHAN IRON & STEEL CO., LTD.
Shanghai 201900 (CN)

(72) Inventors:
• JI, Yaming
  Shanghai 201900 (CN)
• LING, Chen
  Shanghai 201900 (CN)
• LI, Guobao
  Shanghai 201900 (CN)
• YANG, Yongjie
  Shanghai 201900 (CN)
• WU, Meihong
  Shanghai 201900 (CN)
• ZHAO, Zipeng
  Shanghai 201900 (CN)
• MA, Changsong
  Shanghai 201900 (CN)

(74) Representative: Maiwald GmbH
Elisenhof
Elisenstraße 3
80335 München (DE)

(54) COATING FOR ORIENTED SILICON STEEL COATING LAYER, AND ORIENTED SILICON STEEL PLATE AND MANUFACTURING METHOD THEREFOR

(57) The present disclosure relates to a coating, comprising a phosphate salt, a colloidal silica and a chromic acid compound, wherein the phosphate salt comprises magnesium dihydrogen phosphate and aluminum dihydrogen phosphate, and wherein a molar ratio of element Al to element Mg in the phosphate salt is 0.02 to 0.15. The present disclosure also relates to a grain-oriented silicon steel sheet, comprising: a substrate; and a coating layer on a surface of the substrate, wherein the coating layer is formed from the coating according to the present disclosure. The present disclosure further relates to a method for manufacturing a grain-oriented silicon steel sheet, comprising the steps of: applying the coating onto the surface of the substrate, and then performing a sintering treatment, wherein the substrate has a temperature, at which the sintering treatment is performed, of 800 to 880 °C. The coating layer formed from the coating according to the present disclosure can impart higher tension and more excellent heat resistance to the grain-oriented silicon steel sheet, and has good promotion prospects and application effects.

Fig. 1

**Description**

TECHNICAL FIELD

The present disclosure relates to a coating, and a steel sheet and a manufacturing method therefor, in particular to a coating for grain-oriented silicon steel coating layer, and a grain-oriented silicon steel sheet and a manufacturing method therefor.

BACKGROUND ART

As well known in the art, grain-oriented silicon steel sheet refers to an electrical steel sheet in which the steel contains silicon and a direction of easy magnetization axis of grain (100)<001> is substantially consistent with a rolling direction. The grain-oriented silicon steel sheet is mainly used to manufacture a transformer core, which is excellent in magnetic properties in the rolling direction and is an important soft magnetic material. When the grain-oriented silicon steel sheet is used as the material for manufacturing the transformer core, the energy loss and noise level of the transformer can be effectively reduced.

At present, imparting high tension to grain-oriented silicon steel through a surface coating layer is an important technical means for improving the performance of grain-oriented silicon steel. In the prior art, the surface coating layer of grain-oriented silicon steel sheet is generally composed of a forsterite ($Mg_2SiO_4$)-based ceramic film and an insulating coating layer thereon. The insulating coating layer can play a role of insulation, rust prevention and improvement of processability.

Under normal circumstances, the surface coating layer of grain-oriented silicon steel is formed at a high temperature. When the temperature of the grain-oriented silicon steel sheet having a surface coating layer thereon drops to room temperature, as the surface coating layer has a lower thermal expansion rate than that of the steel sheet, the difference in thermal expansion rate between the steel sheet and the coating layer imparts tension to the steel sheet. The tension imparted to the steel sheet can reduce the loss (the abnormal eddy current loss is reduced by narrowing the width of 180° magnetic domain) and magnetostriction of grain-oriented silicon steel. Therefore, the energy loss and noise level of the transformer can be effectively reduced.

In recent years, in order to further improve the performance of grain-oriented silicon steel, a large number of scientific and technological workers have made many beneficial attempts and have designed many new surface coating layers.

Japanese patent document titled "Method for Forming an Insulation Coating on a Grain-Oriented Silicon Steel Sheet" with the publication number JPS4839338A and the publication date June 9, 1973 discloses a coating comprising an aluminum dihydrogen phosphate, colloidal silica and chromic anhydride. After the above coating is applied on a surface of the grain-oriented silicon steel and subjected to a heat treatment, a $MgO$-$P_2O_5$-$SiO_2$ and $Al_2O_3$-$P_2O_5$-$SiO_2$ phosphate-based glass coating layer is formed on the surface of the steel sheet.

Chinese patent document titled "Insulating Coating Treatment Solution and Method of Manufacturing Metal Having an Insulating Coating" with the publication number CN107923046A and the publication date April 17, 2018 discloses an insulating coating treatment solution, comprising: a phosphate of at least one selected from the group consisting of Mg, Ca, Ba, Sr, Zn, Al and Mn; and two or more of colloidal silicas having different mean particle diameters. In this application, the tension of the insulating coating layer is optimized and improved by colloidal silicas having different particle diameters. In the above technical solution, compactness of the coating layer can be improved to a certain extent by using a mixture of silica sol with different particle sizes, however, there is very limited room for improvement of the tension.

Chinese patent document titled "Grain-Oriented Electrical Steel Sheet with Coating Layer, and Method for Manufacturing the Same" with the publication number CN104024474A and the publication date September 3, 2014 discloses a grain oriented silicon steel sheet. In this application, a coating layer that contains elements P, Si, Cr and O as well as at least one element selected from the group consisting of Mg, Al, Ni, Co, Mn, Zn, Fe, Ca and Ba, and that includes at least 5 wt % of phosphate crystal phase is prepared, and thus a higher tensile stress is attained, and iron loss is reduced. In the above technical solution, the tension imparted to the steel sheet by an insulating coating layer is improved by increasing the elastic modulus of the coating layer, but it is required to be realized by increasing an amount of chromic anhydride added and increasing a temperature at which the coating layer is sintered. However, the range of the amount of chromic anhydride added in the phosphate coating layer is very narrow. When the amount of the chromic anhydride is increased to a certain extent, cracks and haze/opacification occur in the coating layer. When the temperature at which the coating layer is sintered is higher than about 900 °C, it causes crystallization of the colloidal silica. Although a crystalline phase formed in the coating layer can increase the tension, it results in a decrease in the corrosion resistance and transparency of the coating layer.

It can be seen from the above that in the prior art, the performances imparted to the grain-oriented silicon steel sheet by phosphate-based glass coating layer are still not good, and there are still defects of insufficient tension and low heat resistance. When the transformer core made of grain-oriented silicon steel sheet is subj ected to the stress relief annealing process, the performance of the coating layer on the surface of the grain-oriented silicon steel deteriorates, resulting in a decrease in the tension, such that the energy loss and noise level of the transformer cannot be effectively reduced.

SUMMARY OF INVENTION

In view of the above technical problems in this field, the inventor creatively designed a new coating through a lot of studies. The coating can be applied to the surface of grain-oriented silicon steel to form a coating layer having improved tension and heat resistance. The formed coating layer can effectively reduce the energy loss and noise level of the transformer. The coating according to the present disclosure has good promotion prospects and application effects.

One of objects of the present disclosure is to provide a coating that can be used to form a surface coating layer of the grain-oriented silicon steel sheet. The surface coating layer can impart higher tension and more excellent heat resistance to the grain-oriented silicon steel sheet.

In order to achieve the above object, the present disclosure provides a coating, comprising: a phosphate salt, a colloidal silica and a chromic acid compound; wherein the phosphate salt comprises magnesium dihydrogen phosphate and aluminum dihydrogen phosphate, and a molar ratio (Al/Mg) of element Al to element Mg in the phosphate salt is 0.02 to 0.15.

Preferably, the coating according to the present disclosure has active ingredients consisting of: the phosphate salt, the colloidal silica and the chromic acid compound; and wherein the phosphate salt comprises magnesium dihydrogen phosphate and aluminum dihydrogen phosphate, and the molar ratio of element Al to element Mg in the phosphate salt is 0.02 to 0.15.

In one embodiment, water may be used as a solvent for the coating. In one embodiment, the coating contains soluble phosphate salt, colloidal silica and chromic acid compound. In one embodiment, after being subjected to a sintering heat treatment, the phosphate salt can form a network-shaped structure on the surface of the steel sheet. In one embodiment, colloidal silica and phosphate can form a coating layer having a low coefficient of thermal expansion after being subjected to the sintering heat treatment.

It should be noted that in the coating according to the present disclosure, the phosphate salt contains magnesium dihydrogen phosphate and aluminum dihydrogen phosphate, which contain a certain amount of free phosphate ions. The phosphate salts readily absorb water and dissolve, thereby destroying the integrity of the coating layer formed. Therefore, in the coating according to the present disclosure, a chromic acid compound needs to be additionally added, so that stable $CrPO_4$ can be formed. The chromic acid compound plays a role of immobilizing phosphate ions and improving the water resistance of the coating layer.

Through thorough researches, the present inventors found that by adjusting the ratio of magnesium dihydrogen phosphate and aluminum dihydrogen phosphate to a certain range, the tension of the coating layer formed after the coating is applied onto the surface of grain-oriented silicon steel can be significantly improved, and a degree of tension deterioration of the coating layer after the coating layer is subjected to stress relief annealing can be reduced. Therefore, in order to ensure the quality of the coating layer, the molar ratio of element Al to element Mg in the phosphate salt is controlled to from 0.02 to 0.15, preferably from 0.02 to 0.085.

It should be noted that if the molar ratio of element Al to element Mg is lower than 0.02, the effect of improving the tension of the coating layer is not obvious; if the molar ratio of Al to Mg is higher than 0.15, the effect of improving the tension of the coating layer is not obvious and the tension of the coating layer deteriorates after stress relief annealing. Therefore, in the coating according to the present disclosure, the molar ratio of element Al to element Mg is controlled to between 0.02 and 0.15.

Preferably, in the coating according to the present disclosure, a mass ratio of colloidal silica to the phosphate salt (colloidal silica/phosphate salt) is 0.8 to 1.2. By controlling the mass ratio of colloidal silica to phosphate salt between 0.8 and 1.2, the tension effect of the coating layer of the grain-oriented silicon steel can be better exerted.

In the technical solution of the present disclosure, the addition of chromic acid compound can play a role of immobilizing phosphate ions and improving the water resistance of the coating layer. When the mass ratio of the chromic acid compound to the phosphate salt is 0.1 or more, the moisture resistance of the coating layer can be improved. When the mass ratio of the chromic acid compound to the phosphate salt is 0.5 or less, the haze/opacification and cracks of the coating layer can be reduced, while the tension and corrosion resistance of the coating layer can be improved.

Therefore, in the coating according to the present disclosure, in order to achieve better moisture resistance, tension, and corrosion resistance of the coating layer, and reduce haze/opacification and crack of the coating layer, it is also preferable to further control the mass ratio of the chromic acid compound to the phosphate salt. In a preferred embodiment, the mass ratio of the chromic acid compound to the phosphate salt (chromic acid compound/phosphate salt) is 0.1 to 0.5, more preferably 0.2 to 0.4.

Another object of the present disclosure is to provide a grain-oriented silicon steel sheet, which is coated with the coating according to the present disclosure, so that the grain-oriented silicon steel sheet has excellent properties. The tension imparted to the grain-oriented silicon steel sheet by the coating layer formed from the coating according to the present disclosure can effectively reduce the loss and magnetostriction of the grain-oriented silicon steel. The grain-oriented silicon steel sheet according to the present disclosure can be used as the material for manufacturing the iron core of the transformer, which can effectively reduce the energy loss and noise level of the transformer.

In order to achieve the above object, the present disclosure provides a grain-oriented silicon steel sheet, comprising a substrate and a coating layer on the surface of the substrate, wherein the coating layer is formed from the coating as described in the present disclosure.

Preferably, the grain-oriented silicon steel sheet according to the present disclosure has a surface tension of > 8 MPa and a degree of tension deterioration before and after stress relief annealing treatment of ≤ 5%.

Preferably, the grain-oriented silicon steel sheet according to the present disclosure after stress relief annealing treatment has an iron loss $P_{17/50}$ of 0.6 to 1.37 W/kg.

In the grain-oriented silicon steel sheet according to the present disclosure, in order to achieve better tension and insulation effect of the coating layer while increasing the lamination factor of the steel sheet, the coating layer may be controlled to have a single-sided dry film amount within a certain range. When the coating layer has a single-sided dry film amount of 2 $g/m^2$ or more, the tension and insulation effect of the coating layer can be improved. When the coating layer has a single-sided dry film amount of 8 $g/m^2$ or less, the lamination factor of the steel sheet can be improved. It is thus preferred that, in the grain-oriented silicon steel sheet according to the present disclosure, the coating layer has a single-sided dry film amount of 2 to 8 $g/m^2$. In a further preferred embodiment, the coating layer has a single-sided dry film amount of 3 to 6 $g/m^2$.

Preferably, the substrate has a thickness of 0.15 to 0.50 mm.

In the grain-oriented silicon steel sheet according to the present disclosure, the composition of the substrate in the grain-oriented silicon steel sheet is not particularly limited. Any prior art component system capable of achieving the technical effects of the present disclosure can be used. Preferably, the substrate is a ferro-silicon alloy having a Goss texture, and the substrate has a content of element Si of 2% to 4% in percentage by mass.

Preferably, the substrate has a forsterite-free ceramic film or a forsterite-containing ceramic film on the surface thereof.

A further object of the present disclosure is to provide a method for manufacturing the above grain-oriented silicon steel sheet. The above grain-oriented silicon steel sheet can be efficiently produced by this manufacturing method.

In order to achieve the above object, the present disclosure provides a method for manufacturing a grain-oriented silicon steel sheet, comprising the steps of: applying the coating onto the surface of the substrate, and then performing a sintering treatment, wherein the substrate has a temperature (i.e., a substrate temperature), at which the sintering treatment is performed, of 800 to 880 °C.

In the method for manufacturing the grain-oriented silicon steel sheet according to the present disclosure, the substrate temperature, at which the sintering treatment is performed, is controlled to be between 800 and 880 °C. This is because: when the temperature of the substrate during the sintering treatment is lower than 800 °C, the purpose of flatness of the steel sheet cannot be achieved, and the effect of imparting the tension to the steel sheet by the coating layer is not significant. When the temperature of the substrate during the sintering treatment is higher than 880 °C, the silica in the coating layer tends to form crystalline silica, resulting in a decrease in the compactness and tension of the coating layer.

Compared with the prior art, the coating, and the grain-oriented silicon steel sheet and the manufacturing method therefor according to the present disclosure have the following advantages and beneficial effects:
In the coating according to the present disclosure, the inventors designed and controlled the molar ratio of element Al and element Mg in the mixed phosphate salts of magnesium dihydrogen phosphate and aluminum dihydrogen phosphate. By controlling the molar ratio of the two between 0.02 and 0.15, it is ensured that the coating layer formed by applying the coating onto the surface of the grain-oriented silicon steel can impart higher tension and more excellent heat resistance to the steel sheet.

The grain-oriented silicon steel sheet coated with the above coating according to the present disclosure has extremely excellent performance. The tension imparted to the steel sheet by the coating layer formed from the coating according to the present disclosure can effectively reduce the loss and magnetostriction of the grain-oriented silicon steel. The grain-oriented silicon steel sheet according to the present disclosure can be used as the material for manufacturing the iron core of the transformer, and can effectively reduce the energy loss and noise level of the transformer.

BRIEF DESCRIPTION OF DRAWINGS

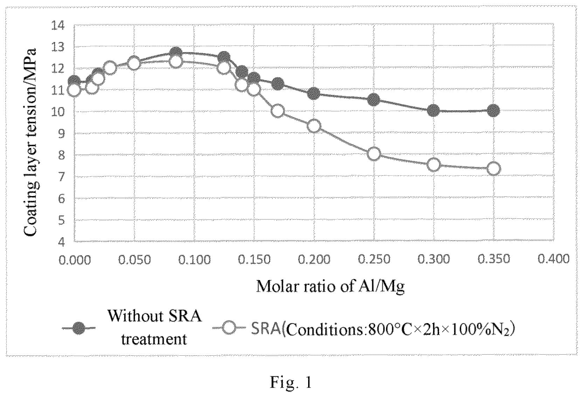

Fig. 1 schematically shows the relationship between the molar ratio of element Al to element Mg in the phosphate salt in the coating and the tensile stress (coating layer tension) imparted to the steel sheet by the coating layer.

DETAILED DESCRIPTION

All technical and scientific terms used herein have the same meaning as commonly understood to one of ordinary skill in the art to which this disclosure belongs unless explicitly indicated otherwise. It should be understood that the terminology used in the description of the present disclosure serves for the purpose of describing particular embodiments only, and is not intended to be limiting.

Herein, the tension can be determined by methods commonly used in the art, such as the method as described in the Examples.

Herein, the expression "degree of tension deterioration before and after stress relief annealing treatment" refers to a rate of change (%) of the tension before and after stress relief annealing treatment, i.e., the rate of change (%) = (tension value before stress relief annealing treatment - tension value after stress relief annealing treatment) / tension value before stress relief annealing treatment *100%.

Herein, the single-sided dry film amount refers to the mass of coating layer on the single-sided surface of the steel sheet per unit area, which is determined by: removing the coating layer on the surface to be measured, and calculating based on the weight change of the steel sheet before and after removal of the coating layer and the area of the steel sheet.

Herein, the iron loss $P_{17/50}$ refers to an iron loss value measured under conditions of a magnetic flux density of 1.7 T and a frequency of 50 Hz.

Hereinafter, the coating, and the grain-oriented silicon steel sheet and the manufacturing method therefor according to the present disclosure will be further explained and described based on figures and examples, however, the explanation and description do not constitute inappropriate limitation to the technical solution of the present disclosure. All reagents used in the examples can be obtained through commercial channels. The experimental methods, in which specific conditions were not specified in the examples, were implemented in accordance with conventional conditions known in the art or the conditions recommended by the manufacturer.

**Examples 1 to 15 and Comparative Examples 1 to 7**

The coatings of Examples 1 to 15 and Comparative Examples 1 to 7 were prepared by mixing phosphate salt, colloidal silica, and chromic acid compound. Table 1 lists the parts by mass and mass ratios of each component in the coatings of Examples 1 to 15 and Comparative Examples 1 to 7.

Table 1

| No. | Parts by mass of phosphate salt | Parts by mass of colloidal silica | Mass ratio of colloidal silica to phosphate salt | Parts by mass of chromic acid compound | Mass ratio of chromic acid compound to phosphate salt |
|---|---|---|---|---|---|
| Example 1 | 100 | 100 | 1.0 | 25 | 0.25 |
| Example 2 | 100 | 100 | 1.0 | 25 | 0.25 |
| Example 3 | 100 | 100 | 1.0 | 25 | 0.25 |
| Example 4 | 100 | 100 | 1.0 | 25 | 0.25 |
| Example 5 | 100 | 100 | 1.0 | 25 | 0.25 |
| Example 6 | 100 | 100 | 1.0 | 25 | 0.25 |
| Example 7 | 100 | 100 | 1.0 | 25 | 0.25 |
| Example 8 | 100 | 80 | 0.8 | 25 | 0.25 |
| Example 9 | 100 | 110 | 1.1 | 25 | 0.25 |
| Example 10 | 100 | 120 | 1.2 | 25 | 0.25 |
| Example 11 | 100 | 100 | 1.0 | 10 | 0.10 |
| Example 12 | 100 | 100 | 1.0 | 30 | 0.30 |
| Example 13 | 100 | 100 | 1.0 | 40 | 0.40 |
| Example 14 | 100 | 100 | 1.0 | 50 | 0.50 |

(continued)

| No. | Parts by mass of phosphate salt | Parts by mass of colloidal silica | Mass ratio of colloidal silica to phosphate salt | Parts by mass of chromic acid compound | Mass ratio of chromic acid compound to phosphate salt |
|---|---|---|---|---|---|
| Example 15 | 100 | 100 | 1.0 | 50 | 0.50 |
| Comparative Example 1 | 100 | 100 | 1.0 | 25 | 0.25 |
| Comparative Example 2 | 100 | 100 | 1.0 | 25 | 0.25 |
| Comparative Example 3 | 100 | 100 | 1.0 | 25 | 0.25 |
| Comparative Example 4 | 100 | 100 | 1.0 | 25 | 0.25 |
| Comparative Example 5 | 100 | 100 | 1.0 | 25 | 0.25 |
| Comparative Example 6 | 100 | 100 | 1.0 | 25 | 0.25 |
| Comparative Example 7 | 100 | 100 | 1.0 | 25 | 0.25 |

It should be noted that, in Examples 1 to 15 and Comparative Examples 1 to 7, all the phosphate salts contained Mg-containing dihydrogen phosphate and Al-containing dihydrogen phosphate. The molar ratios of element Al to element Mg in the phosphate salts of Examples and Comparative Examples are listed in Table 2 below.

Table 2

| No. | Molar ratio of element Al to element Mg |
|---|---|
| Example 1 | 0.020 |
| Example 2 | 0.030 |
| Example 3 | 0.050 |
| Example 4 | 0.085 |
| Example 5 | 0.125 |
| Example 6 | 0.140 |
| Example 7 | 0.150 |
| Example 8 | 0.050 |
| Example 9 | 0.050 |
| Example 10 | 0.050 |
| Example 11 | 0.050 |
| Example 12 | 0.050 |
| Example 13 | 0.050 |
| Example 14 | 0.050 |
| Example 15 | 0.050 |
| Comparative Example 1 | **0** |
| Comparative Example 2 | **0.015** |

(continued)

| No. | Molar ratio of element Al to element Mg |
|---|---|
| Comparative Example 3 | **0.170** |
| Comparative Example 4 | **0.200** |
| Comparative Example 5 | **0.250** |
| Comparative Example 6 | **0.300** |
| Comparative Example 7 | **0.350** |

It should be noted that, in Examples 1 to 15 and Comparative Examples 1 to 7, all the chromic acid compounds used in Examples and Comparative Examples were chromic anhydrides. Of course, in some other embodiments, a chromate salt (such as magnesium dichromate, calcium chromate, and zinc chromate) may also be used as the chromic acid compound.

Next, the coatings in Examples 1 to 15 and Comparative Examples 1 to 7 were respectively coated onto the substrate of the grain-oriented silicon steel sheet to prepare the grain-oriented silicon steel sheet, wherein the substrate was ferro-silicon alloy having a Goss texture.

The same substrate steel slab was used for the grain-oriented silicon steel sheets in Examples and Comparative Examples, wherein the mass percentages of each chemical element were as follows: C: 0.047%, Si: 3.23%, S: 0.008%, Als: 0.029%, N: 0.006%, Mn: 0.012%, and the balance being Fe and other inevitable impurities. Certainly, in some other embodiments, the substrate steel slab having other chemical composition may also be used, and the substrate may be controlled to have a content of element Si being between 2% and 4% in percentage by mass.

The grain-oriented silicon steel sheets in Examples 1 to 15 and Comparative Examples 1 to 7 were prepared by the following steps:

(1) performing smelting and casting according to the mass percentages of the above chemical elements to obtain a substrate steel slab;

(2) heating the steel slab at a temperature of 1150 °C, and then hot rolling the slab to a hot-rolled sheet having a thickness of 2.8mm;

(3) pickling the hot-rolled sheet, and then cold rolling to give a cold-rolled sheet having a thickness of 0.15 to 0.50 mm, wherein the cold rolling may be performed once, or two or more passes of cold rolling may be performed with intermediate annealing performed therebetween;

(4) subjecting the cold-rolled sheet to decarburization annealing treatment, and then performing a continuous nitriding treatment under a moist protective atmosphere of nitrogen and hydrogen aerated with ammonia gas;

(5) applying the steel sheet after nitriding treatment with a separator containing magnesium oxide as a main component;

(6) after coiling, performing a secondary recrystallization annealing in a dry protective atmosphere of nitrogen and hydrogen, wherein the annealing was controlled to be performed at a temperature of 1200 °C and kept at the temperature for 25 hours, to obtain a substrate covered with a forsterite ceramic film thereon and having a Goss texture, wherein the substrate had a thickness of 0.15 to 0.50 mm;

(7) applying the coating onto the surface of the substrate;

(8) sintering at a temperature of 800 to 880 °C for more than 10s to obtain the grain-oriented silicon steel sheet, and controlling the coating layer to have a single-sided dry film amount of 2 to 8 g/m$^2$.

It should be noted that regardless of whether the substrate has a forsterite ceramic film on the surface thereof or not, the coating according to the present disclosure can be effectively applied. Therefore, in the above manufacturing method, it is also possible to prevent the forsterite ceramic film from being formed on the surface of the steel sheet by controlling the decarburization annealing and the separator. The substrate may have a forsterite-free ceramic film or a forsterite-containing ceramic film on the surface thereof.

Table 3 lists the relevant process parameters in the manufacturing methods for the grain-oriented silicon steel sheets in Examples 1 to 15 and Comparative Examples 1 to 7.

Table 3

| No. | Step (6) | Step (8) | | |
|---|---|---|---|---|
| | Thickness of substrate (mm) | Sintering temperature (°C) | Sintering time (s) | Single-sided dry film amount (g/m$^2$) |
| Example 1 | 0.23 | 850 | 30 | 5.0 |
| Example 2 | 0.23 | 850 | 30 | 5.0 |
| Example 3 | 0.23 | 850 | 30 | 5.0 |
| Example 4 | 0.23 | 850 | 30 | 5.0 |
| Example 5 | 0.23 | 850 | 30 | 5.0 |
| Example 6 | 0.23 | 850 | 30 | 5.0 |
| Example 7 | 0.23 | 850 | 30 | 5.0 |
| Example 8 | 0.15 | 850 | 30 | 5.0 |
| Example 9 | 0.50 | 850 | 30 | 5.0 |
| Example 10 | 0.23 | 800 | 30 | 5.0 |
| Example 11 | 0.23 | 880 | 30 | 5.0 |
| Example 12 | 0.23 | 850 | 10 | 5.0 |
| Example 13 | 0.23 | 850 | 50 | 5.0 |
| Example 14 | 0.23 | 850 | 30 | 2.0 |
| Example 15 | 0.23 | 850 | 30 | 8.0 |
| Comparative Example 1 | 0.23 | 850 | 30 | 5.0 |
| Comparative Example 2 | 0.23 | 850 | 30 | 5.0 |
| Comparative Example 3 | 0.23 | 850 | 30 | 5.0 |
| Comparative Example 4 | 0.23 | 850 | 30 | 5.0 |
| Comparative Example 5 | 0.23 | 850 | 30 | 5.0 |
| Comparative Example 6 | 0.23 | 850 | 30 | 5.0 |
| Comparative Example 7 | 0.23 | 850 | 30 | 5.0 |

Then, for the obtained grain-oriented silicon steel sheet having a coating layer, the tension imparted to the steel sheet by the coating layer was determined. The performance of the coating layer was evaluated by measuring the rate of change of coating layer tension before and after stress relief annealing. The measuring method of the coating layer tension is as follows. The test results are listed in Table 4.

(1) Tension $\sigma$ of single-sided coating layer: the rolling direction was taken as the length direction, the grain-oriented silicon steel sheet was cut into a sample sheet having a length of 300 mm and a width of 30 mm, and then the single-sided coating layer was removed. The bending amount of the sample sheet was measured, and the tension $\sigma$ of the single-sided coating layer was calculate by the following formula.

$$\sigma \approx \frac{E \times t \times H}{L^2} \times 1000$$

In the above formula, $\sigma$ represents a tension of a coating layer, and its unit can be MPa; E represents a Young's modulus of a steel sheet, and its unit can be GPa; t represents a thickness of a steel sheet, and its unit can be mm; H represents an amount of warpage, and its unit can be mm; and L represents a length of a steel sheet, and its unit can be mm.

Thereby, the tension $\sigma$ of the single-sided coating layer of the grain-oriented silicon steel sheets in Examples 1 to 15 and Comparative Examples 1 to 7 was obtained, wherein the tension $\sigma$ is a tension $\sigma$ of the coating layer before stress relief annealing (SPA) treatment.

(2) The grain-oriented silicon steel sheet was subjected to stress relief annealing, and then the coating layer tension in the grain-oriented silicon steel sheet after stress relief annealing treatment was tested. The process conditions of the stress relief annealing treatment were as follows: the stress relief annealing heat treatment was carried out at 800° C for 2 hours, and the atmosphere was 100% $N_2$. The test method for the coating layer tension in the grain-oriented silicon steel sheet after SRA treatment was the same as the test method for the tension $\sigma$ of the single-sided coating layer as described above.

The heat resistances of the grain-oriented silicon steel sheets in Examples and Comparative Examples were obtained by comparing the tension values of the coating layers of the grain-oriented silicon steel sheets before and after SRA treatment. A greater change in the tension value of the coating layer before and after SRA heat treatment indicates a worse heat resistance of the steel sheet; on the contrary, a smaller change in the tension value of the coating layer before and after SRA heat treatment indicates a better heat resistance of the steel sheet.

(3) Iron loss: The iron losses $P_{17/50}$ at a magnetic flux density of 1.7 T and a frequency of 50 Hz of the grain-oriented silicon steel sheets in Examples and Comparative Examples after being subjected to stress relief annealing (SRA) treatment were measured.

Table 4 lists the relevant performance test results of the grain-oriented silicon steel sheets in Examples 1 to 15 and Comparative Examples 1 to 7.

Table 4

| No. | Coating layer tension $\sigma$ before SRA (MPa) | Coating layer tension $\sigma$ after SRA (MPa) | Degree of deterioration of coating layer tension $\sigma$ before and after SRA | Iron loss $P_{17/50}$ (W/kg) |
|---|---|---|---|---|
| Example 1 | 11.7 | 11.5 | 1.71% | 0.82 |
| Example 2 | 12 | 12 | 0.00% | 0.80 |
| Example 3 | 12.27 | 12.2 | 0.57% | 0.79 |
| Example 4 | 12.67 | 12.3 | 2.92% | 0.78 |
| Example 5 | 12.46 | 12 | 3.69% | 0.79 |
| Example 6 | 11.8 | 11.4 | 3.39% | 0.83 |
| Example 7 | 11.5 | 11 | 4.35% | 0.84 |
| Example 8 | 12.23 | 12.02 | 1.72% | 0.60 |
| Example 9 | 10.87 | 10.76 | 1.01% | 1.37 |
| Example 10 | 11.23 | 11.01 | 1.96% | 0.84 |
| Example 11 | 12.23 | 12.01 | 1.80% | 0.79 |
| Example 12 | 11.89 | 11.78 | 0.93% | 0.81 |
| Example 13 | 12.66 | 12.45 | 1.66% | 0.76 |
| Example 14 | 8.56 | 8.45 | 1.29% | 0.88 |
| Example 15 | 14.56 | 14.32 | 1.65% | 0.82 |
| Comparative Example 1 | 11.38 | 10.8 | **5.10%** | 0.86 |
| Comparative Example 2 | 11.4 | 10.7 | **6.14%** | 0.87 |

(continued)

| No. | Coating layer tension σ before SRA (MPa) | Coating layer tension σ after SRA (MPa) | Degree of deterioration of coating layer tension σ before and after SRA | Iron loss $P_{17/50}$ (W/kg) |
|---|---|---|---|---|
| Comparative Example 3 | 11.25 | 10 | **11.11%** | 0.88 |
| Comparative Example 4 | 10.8 | 9.3 | **13.89%** | 0.89 |
| Comparative Example 5 | 10.5 | 8 | **23.81%** | 0.90 |
| Comparative Example 6 | 10 | 7.5 | **25.00%** | 0.91 |
| Comparative Example 7 | 9.98 | 7.3 | **26.85%** | 0.92 |

It can be seen from Table 3 that in Examples 1 to 15 in which coatings that meet the design control requirements of the present disclosure were used, the performances of the obtained grain-oriented silicon steel sheet were very excellent: the iron loss was low; and the surface coating layer tension σ before SRA was from 8.56 to 14.56 MPa; and after stress relief annealing at high temperature, the coating layer tension σ did not deteriorate or the degree of deterioration was small (≤5%). It can be seen from the above that the grain-oriented silicon steel sheets in Examples 1 to 15 exhibited very excellent heat resistance.

However, in Comparative Examples 1 to 7, because the coatings had parameter(s) that did not meet the design control requirements of the present disclosure, and the molar ratio of element Al and element Mg did not meet the design requirements of the present disclosure, the properties of the surface coating layers of the obtained grain-oriented silicon steel sheets were poor: coating layer tension was small, and heat resistance was poor. After the grain-oriented silicon steel sheets in Comparative Examples 1 to 7 were subjected to stress relief annealing (SRA) at high temperature, the coating layer tension deteriorated significantly, and the degree of deterioration was much higher than that of the grain-oriented silicon steel sheets in Examples 1 to 15.

Fig. 1 schematically shows the relationship between the molar ratio of element Al to element Mg of the phosphate salt in the coating and the tensile stress (coating layer tension) imparted to the steel sheet by the coating layer.

As shown in Fig. 1, the coating layer in which the molar ratio of element Al to element Mg in the phosphate salt is controlled to between 0.02 and 0.15 has higher tension and excellent heat resistance.

It should be noted that the combination mode of the technical features in the present disclosure is not limited to the combination modes recorded in the claims or the combination modes recorded in the specific embodiments. All the technical features recorded in present disclosure can be combined or integrated in any way, unless there is a contradiction between them.

It should also be noted that the foregoing embodiments merely are specific embodiments of the present disclosure. It is obvious that the present disclosure is not limited to the above embodiments, and similar variations or modifications, which can be directly obtained or easily conceived by those skilled in the art accordingly from the contents disclosed by the present disclosure, all shall fall within the scope of the present disclosure.

**Claims**

1. A coating, wherein the coating comprises: a phosphate salt, a colloidal silica and a chromic acid compound; and wherein the phosphate salt comprises magnesium dihydrogen phosphate and aluminum dihydrogen phosphate, and a molar ratio of element Al to element Mg in the phosphate salt is 0.02 to 0.15, preferably 0.02 to 0.085.

2. The coating according to claim 1, wherein the coating has active ingredients consisting of: the phosphate salt, the colloidal silica and the chromic acid compound; and
wherein the phosphate salt comprises magnesium dihydrogen phosphate and aluminum dihydrogen phosphate, and the molar ratio of element Al to element Mg in the phosphate salt is 0.02 to 0.15, preferably 0.02 to 0.085.

3. The coating according to claim 1 or 2, wherein a mass ratio of the colloidal silica to the phosphate salt is 0.8 to 1.2.

4. The coating according to any of claims 1 to 3, wherein a mass ratio of the chromic acid compound to the phosphate salt is 0.1 to 0.5, and preferably, the mass ratio of the chromic acid compound to the phosphate salt is 0.2 to 0.4.

5. A grain-oriented silicon steel sheet, comprising:

    a substrate; and
    a coating layer on a surface of the substrate,
    wherein the coating layer is formed from the coating according to any of claims 1 to 4.

6. The grain-oriented silicon steel sheet according to claim 5, wherein the grain-oriented silicon steel sheet has a surface tension of > 8 MPa and a degree of tension deterioration before and after stress relief annealing treatment of $\leq$ 5%.

7. The grain-oriented silicon steel sheet according to claim 5 or 6, wherein the grain-oriented silicon steel sheet after stress relief annealing treatment has an iron loss $P_{17/50}$ of 0.6 to 1.37 W/kg.

8. The grain-oriented silicon steel sheet according to any of claims 5 to 7, wherein the coating layer has a single-sided dry film amount of 2 to 8 g/m$^2$, preferably 3 to 6 g/m$^2$.

9. The grain-oriented silicon steel sheet according to any of claims 5 to 8, wherein the substrate has a thickness of 0.15 to 0.50 mm.

10. The grain-oriented silicon steel sheet according to any of claims 5 to 9, wherein the substrate is a ferro-silicon alloy having a Goss texture, and preferably, the substrate has a content of element Si of 2% to 4% in percentage by mass.

11. The grain-oriented silicon steel sheet according to any of claims 5 to 10, wherein the substrate has a forsterite-free ceramic film or a forsterite-containing ceramic film on the surface thereof.

12. A method for manufacturing the grain-oriented silicon steel sheet according to any of claims 6 to 11, comprising the steps of: applying the coating onto the surface of the substrate, and then performing a sintering treatment, wherein the substrate has a temperature, at which the sintering treatment is performed, of 800 to 880 °C.

Fig. 1

## INTERNATIONAL SEARCH REPORT

| | International application No. |
|---|---|
| | **PCT/CN2023/072059** |

**A.    CLASSIFICATION OF SUBJECT MATTER**

C09D1/00(2006.01)i;C23C22/07(2006.01)i;C23C22/20(2006.01)i

According to International Patent Classification (IPC) or to both national classification and IPC

**B.    FIELDS SEARCHED**

Minimum documentation searched (classification system followed by classification symbols)

IPC：C09D C23C

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, ISI Web of Science: 涂料, 取向硅钢, 磷酸二氢铝, 磷酸二氢镁, 摩尔比, 质量比, Al(H2PO4)3, Mg(H2PO4)2, coat, oriented silicon steel, magnesium dihydrogen phosphate, aluminium dihydrogen phosphate, molar ratio, mass ratio

**C.    DOCUMENTS CONSIDERED TO BE RELEVANT**

| Category* | Citation of document, with indication, where appropriate, of the relevant passages | Relevant to claim No. |
|---|---|---|
| X | KR 20130055912 A (POSCO) 29 May 2013 (2013-05-29)<br>description, paragraphs 78-87 | 1-12 |
| A | CN 106243791 A (FUZHOU UNIVERSITY) 21 December 2016 (2016-12-21)<br>entire document | 1-12 |
| A | CN 104530782 A (SHANGHAI DISHENG ANTICORROSION NEW MATERIAL<br>TECHNOLOGY CO., LTD.) 22 April 2015 (2015-04-22)<br>entire document | 1-12 |
| A | CN 111961359 A (WUHAN IRON & STEEL CO., LTD.) 20 November 2020 (2020-11-20)<br>entire document | 1-12 |
| A | WO 2017105111 A1 (POSCO) 22 June 2017 (2017-06-22)<br>entire document | 1-12 |
| A | JP 2006142642 A (NIPPON STEEL CORP.) 08 June 2006 (2006-06-08)<br>entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2023** | **12 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/072059**

| Patent document cited in search report | | | Publication date (day/month/year) | Patent family member(s) | | | Publication date (day/month/year) |
|---|---|---|---|---|---|---|---|
| KR | 20130055912 | A | 29 May 2013 | KR | 101308732 | B1 | 13 September 2013 |
| CN | 106243791 | A | 21 December 2016 | CN | 106243791 | B | 30 October 2018 |
| CN | 104530782 | A | 22 April 2015 | CN | 104530782 | B | 22 February 2017 |
| CN | 111961359 | A | 20 November 2020 | | None | | |
| WO | 2017105111 | A1 | 22 June 2017 | KR | 20170073311 | A | 28 June 2017 |
| | | | | EP | 3392317 | A1 | 24 October 2018 |
| | | | | EP | 3392317 | A4 | 09 January 2019 |
| | | | | JP | 2019507239 | A | 14 March 2019 |
| | | | | JP | 6686146 | B2 | 22 April 2020 |
| | | | | US | 2018374600 | A1 | 27 December 2018 |
| | | | | KR | 20180041652 | A | 24 April 2018 |
| | | | | CN | 108473800 | A | 31 August 2018 |
| JP | 2006142642 | A | 08 June 2006 | JP | 4246689 | B2 | 02 April 2009 |

Form PCT/ISA/210 (patent family annex) (July 2022)

**EP 4 438 682 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4839338 A
- CN 107923046 A
- CN 104024474 A